# FASCICULE DE BREVET EUROPEEN

(11) **EP 2 552 776 B1**
(45) Date de publication et mention de la délivrance du brevet: **07.05.2014**
(21) Numéro de dépôt: 11713681.2
(22) Date de dépôt: 31.03.2011
(51) Int. Cl.: B64C 25/00, B64C 25/50, B64F 1/22

(54) **PROCEDE DE PROTECTION D'UN ATTERRISSEUR D'AERONEF LORS DE SON REMORQUAGE, ET BROCHE POUR L'ATTELAGE D'UNE BARRE DE REMORQUAGE A UNE PARTIE INFERIEURE ORIENTABLE D'UN ATTERRISSEUR**
VERFAHREN ZUM SCHUTZ EINES FLUGZEUGFAHRWERKS BEIM ABSCHLEPPEN EINES FLUGZEUGS SOWIE BOLZEN ZUR KOPPLUNG EINER SCHLEPPSTANGE AN EIN AUSRICHTBARES UNTERTEIL EINES FAHRWERKS
METHOD OF PROTECTING AN AIRCRAFT LANDING GEAR WHILE THE AIRCRAFT IS BEING TOWED, AND PIN FOR COUPLING A TOWING BAR TO AN ORIENTABLE LOWER PART OF A LANDING GEAR

(30) Priorité: 31.03.2010 FR 1052379
(43) Date de publication de la demande: 06.02.2013
(73) Titulaire: Messier-Bugatti-Dowty, 78140 Velizy Villacoublay (FR)
(72) Inventeur: SCHMIDT, Robert Kyle, Cheltenham GL52 6NP (GB); ALLEAU Jean-Luc, 78125 Orcemont (FR)
(74) Mandataire: Beaudouin-Lafon, Emmanuel
(86) Numéro de dépôt international: PCT/EP2011/001613
(87) Numéro de publication internationale: WO 2011/120693

(56) Documents cités:
- EP-A1- 0 335 611
- WO-A1-2006/067442
- DE-A1- 3 642 044
- GB-A- 2 287 681
- US-A- 3 709 522

## Description

La présente invention concerne un procédé de protection d'un atterrisseur d'aéronef lors de son remorquage, ainsi qu'une broche pour l'attelage d'une barre de remorquage à une partie inférieure orientable d'un atterrisseur.

### ARRIERE PLAN DE L'INVENTION

L'invention est relative au remorquage d'aéronefs au sol, par des dispositifs de remorquage destinés à atteler la partie inférieure d'un atterrisseur de l'aéronef à un véhicule de remorquage (comme dans le document US3709522). Ces dispositifs de remorquage se présentent le plus souvent sous forme de barres d'attelage dont une extrémité est montée à l'arrière d'un véhicule de remorquage et l'autre extrémité est attelée sur la partie inférieure de l'atterrisseur auxiliaire de l'aéronef. Généralement, l'attelage de la barre sur l'atterrisseur est réalisé par insertion de l'extrémité de la barre entre des chapes au niveau de la tige coulissante de l'atterrisseur auxiliaire, au voisinage de l'essieu portant les roues de l'atterrisseur. On vient ensuite solidariser l'extrémité de la barre à l'aide d'une broche de liaison, dite broche de remorquage. La barre d'attelage transmet à l'atterrisseur des efforts de traction et de flexion importants, et cela d'autant plus quand l'aéronef est chargé. Le niveau d'efforts transmis à l'atterrisseur est également tributaire des changements de direction imprimés par le véhicule de remorquage: en effet, le seuil d'effort supportable par l'atterrisseur est nettement plus élevé quand les roues de l'atterrisseur sont sensiblement parallèles à l'axe longitudinal de l'aéronef que lorsque celles-ci sont orientées selon une direction oblique par rapport à l'axe longitudinal de l'aéronef.

Afin d'éviter que la barre n'endommage l'atterrisseur en transmettant des efforts trop élevés à celui-ci, il est connu d'utiliser la broche de remorquage comme fusible mécanique, en la fragilisant localement de façon à ce qu'elle rompe dès qu'un certain seuil d'effort prédéterminé est atteint. Cependant, cette solution n'est pas dénuée d'inconvénients. D'une part, afin de garantir que la broche rompra quand la situation l'exige, notamment quand l'angle d'orientation des roues de l'atterrisseur est important, il est prudent de prendre une marge de sécurité importante dans la détermination de son seuil de rupture, ce qui entraîne donc des casses fréquentes de broche, dans certains cas inutiles. D'autre part, la rupture de la broche n'est pas une réponse optimale en termes de sécurité, car si elle rompt effectivement la liaison entre l'aéronef et le véhicule de remorquage, mettant fin aux efforts excessifs exercés sur l'atterrisseur, en revanche elle ne provoque pas nécessairement l'immobilisation immédiate de l'aéronef, qui est susceptible de poursuivre son déplacement au sol sur sa lancée, par inertie.

### BUT DE L'INVENTION

Le but de l'invention est de remédier aux inconvénients mentionnés plus haut, en proposant un mode de protection amélioré des atterrisseurs d'avions lors de leur remorquage.

### OBJET DE L'INVENTION

A cet effet, l'invention a pour objet un procédé de protection d'un atterrisseur d'aéronef lors de son remorquage au moyen d'une barre de remorquage attelée à une partie inférieure orientable de l'atterrisseur, comprenant l'étape de générer une alarme lorsqu'un effort de remorquage imposé par la barre de remorquage sur l'atterrisseur atteint ou dépasse un seuil d'effort prédéterminé. Selon l'invention, on fait varier ledit seuil en fonction d'une orientation de la partie inférieure orientable de l'atterrisseur.

Avec le procédé de l'invention, on tient ainsi compte du critère d'orientation de la partie inférieure de l'atterrisseur, de fait de l'orientation des roues de l'atterrisseur. On peut donc choisir très précisément le seuil d'effort au-delà duquel on risque de dégrader l'atterrisseur en fonction de l'orientation des roues. En effet, comme évoqué plus haut, il s'avère que les atterrisseurs ont un seuil d'effort bien supérieur quand les roues sont alignées avec l'axe longitudinal de l'aéronef lors de son remorquage que lorsque les roues sont inclinées par rapport à cet axe. La prise en compte de l'orientation des roues permet donc de déclencher une alarme de dépassement de seuil uniquement quand cela s'avère nécessaire, de façon beaucoup plus fiable et précise que dans les solutions précédentes.

L'invention a également pour objet une broche pour l'attelage d'une barre de remorquage à une partie inférieure orientable d'un atterrisseur, la broche comportant:
- des moyens pour mesurer des efforts auxquels la broche est soumise,
- des moyens pour mesurer l'inclinaison de la broche par rapport à l'horizontale,
- des moyens pour calculer un seuil d'effort en fonction de l'orientation de la partie inférieure de l'atterrisseur déduite de l'inclinaison de la broche,
- des moyens pour comparer les efforts mesurés avec le seuil d'effort et pour générer une alarme si les efforts mesurés atteignent ou dépassent le seuil d'effort.

La broche de remorquage est particulièrement appropriée pour mettre en oeuvre le procédé selon l'invention. En effet, on exploite avantageusement le fait qu'on peut déduire de la mesure de l'orientation de la broche par rapport à l'horizontale celle de l'orientation des roues de l'atterrisseur dans le cas particulier des atterrisseurs présentant un angle de chasse, c'est-à-dire les atterrisseurs dont l'axe de pivotement de la partie inférieure est incliné par rapport à la verticale. En instrumentant de façon appropriée la broche de remorquage, on peut ainsi, au niveau de la broche seule, déterminer à la fois l'orientation des roues de l'atterrisseur et le seuil d'efforts (subis par la broche et donc transmis à l'atterrisseur) acceptable pour l'atterrisseur afin d'éviter sa dégradation, en fonction de l'orientation de ses roues. De fait, l'invention permet de mettre en oeuvre le procédé de protection de l'atterrisseur sans avoir à équiper l'atterrisseur en question de moyens additionnels de mesure ou de calcul, toutes les mesures et tous les calculs s'opérant sur la broche de remorquage, qu'il est facile de changer et qui reste dans le matériel de remorquage au sol. En outre, le système d'alarme permet d'avertir l'opérateur du remorquage afin qu'il modifie les conditions de remorquage, évitant ainsi que l'atteinte de la contrainte seuil n'entraîne systématiquement la rupture de la broche nécessitant son remplacement.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels:
- la figure 1 est une vue schématique latérale d'une partie inférieure d'atterrisseur auxiliaire d'aéronef, dont les roues sont parallèles à l'axe longitudinal de l'aéronef ;
- la figure 2 est une vue schématique latérale de partie inférieure d'atterrisseur auxiliaire d'aéronef selon la figure 1, dont les roues sont cette fois tournées d'un angle donné par rapport l'axe longitudinal de l'aéronef ;
- la figure 3 est une vue schématique de la broche de remorquage, instrumentée selon l'invention, pour la barre d'attelage de l'atterrisseur à un véhicule de remorquage ;
- la figure 4 est une vue schématique de dessus de l'attelage de l'atterrisseur à la barre de remorquage.

### DESCRIPTION DETAILLEE DE L'INVENTION

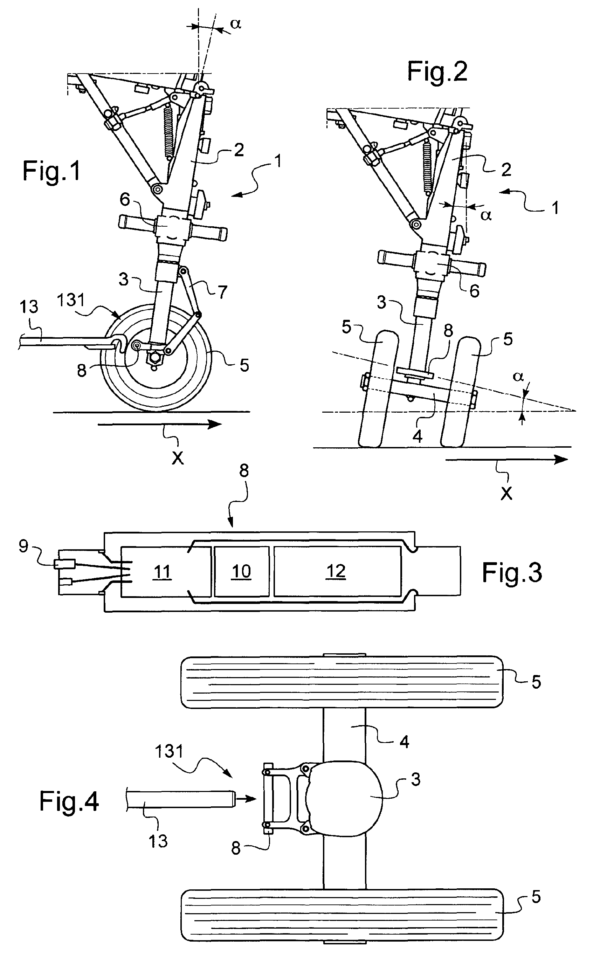

En référence à la figure 1, un atterrisseur auxiliaire 1 d'aéronef comprend un caisson 2 relié directement à la structure de l'aéronef, et dans lequel une tige 3 est montée pour coulisser de façon télescopique et former avec le caisson 2 un amortisseur. La tige 3 porte en partie basse un essieu 4 sur lequel sont montées deux roues 5. Le caisson 2 comporte un organe d'orientation comportant un collier 6 monté tournant autour du caisson 2. Ici, l'atterrisseur présente un angle de chasse α de sensiblement 10°.

Hors situation de remorquage, ce collier 6 est manoeuvré par des vérins d'orientation : Le collier est relié à la tige 3 par un compas d'orientation 7 comportant deux branches articulées de sorte que la position angulaire de la tige 3 est déterminée par la position angulaire du collier 6. Pour orienter les roues 5, il suffit de commander les vérins d'orientation pour faire tourner le collier 6 qui entraîne en rotation la tige 3 par l'intermédiaire du compas d'orientation 7.

Quand l'aéronef est en situation de remorquage au sol, la commande d'orientation des roues 5 est désactivée. Comme représenté à la figure 4, On vient atteler une barre de remorquage 13 à l'une de ses extrémités à un véhicule de remorquage (non représenté), et à l'autre extrémité 131 sur une broche de remorquage 8 fixée en partie basse de la tige coulissante 3 à proximité de l'essieu 4, comme représenté en figure 4. Le véhicule de remorquage entraîne la barre de remorquage 13, qui entraîne alors l'atterrisseur 1 selon une trajectoire donnée au sol. A la figure 1, les roues 5 de l'atterrisseur 1 sont représentées parallèles à l'axe longitudinal X de l'aéronef.

La figure 2 représente le même atterrisseur 1 qu'à la figure 1, mais avec des roues 5 tournées de 90° par rapport à leur orientation selon la figure 1. Avec une orientation de roues aussi extrême, il s'est avéré que la charge supportable sans détérioration de l'atterrisseur 1 était environ deux fois inférieure à la charge supportable du même atterrisseur avec les roues parallèles à l'axe longitudinal X selon la figure 1.

Par ailleurs, compte tenu de l'angle de chasse on comprend que l'inclinaison de la broche 8 par rapport à l'horizontale est directement liée à l'orientation des roues 5 de l'atterrisseur. L'angle que fait la broche 8 par rapport à l'horizontale est égal à l'angle de chasse α de la tige coulissante 3 par rapport à la verticale lorsque les roues 5 sont orientées à 90°. Ainsi, l'angle que fait la broche par rapport à l'horizontale varie entre 0° lorsque les roues sont alignées dans l'axe longitudinal de l'aéronef, et un angle égal à l'angle de chasse de l'atterrisseur lorsque les roues sont orientées à 90°.

Comme représenté en figure 3, la broche 8 de remorquage a été modifiée selon l'invention, de façon à comporter différents composants, dont :
- des moyens pour mesurer des efforts auxquels sont soumis la broche, à savoir ici une ou plusieurs jauges de contrainte 9,
- des moyens pour mesurer l'inclinaison de la broche 8 par rapport à l'horizontale, à savoir ici un accéléromètre 10, et plus particulièrement un accéléromètre triaxial.
- des moyens pour calculer le seuil d'effort en fonction de l'orientation de la partie inférieure de l'atterrisseur 1 déduite de l'orientation de la broche 8,
- des moyens pour comparer les efforts mesurés avec le seuil d'effort et pour générer une alarme si les efforts mesurés atteignent ou dépassent les seuils d'effort.

Les moyens de calcul, de comparaison et de déclenchement d'alarmes sont ici regroupés en un seul ensemble 11 de composants électroniques connus en soi.

Est également prévue une batterie 12, qui permet de donner une autonomie de fonctionnement suffisante aux composants précédents.

Il est plus avantageux d'utiliser un accéléromètre triaxial plutôt qu'un inclinomètre (mono axial), car l'accéléromètre triaxial permet aussi d'estimer une inclinaison de l'atterrisseur du fait de la non planéité éventuelle du sol. Utiliser un accéléromètre triaxial permet en outre d'obtenir des données utiles pour d'autres fonctions : Si la détermination de l'orientation des roues par le système de commande propre à l'aéronef requiert un signal d'accéléromètre hautement filtré, le signal d'accéléromètre peu ou pas filtré peut être également utilisé pour déterminer la réponse dynamique de la masse non suspendue de l'atterrisseur.

Le procédé de protection de l'atterrisseur 1 selon l'invention mis en oeuvre par la broche 8 de remorquage ainsi instrumentée fonctionne de la façon suivante : lors du remorquage, la broche 8 présente une inclinaison variable par rapport à l'horizontale en fonction des changements de direction imprimés par le véhicule de remorquage et transmis à la broche par la barre de remorquage. La variation d'inclinaison est mesurée par l'accéléromètre 10, le niveau de contrainte de la broche est mesuré par la jauge de contrainte 9 puis, en fonction de ce couple de valeurs, les moyens de calcul 11 calculent la charge seuil supportable par l'atterrisseur pour une inclinaison donnée de roues. Les moyens de comparaison 11 comparent cette valeur seuil à la valeur mesurée, et déclenchent une alarme quand ce seuil est atteint ou dépassé.

Le déclenchement de l'alarme peut prendre plusieurs formes. Il peut s'agir d'un affichage alphanumérique ou un avertissement sonore et/ou visuel, situé sur la broche de remorquage elle-même, qui est alors munie du moyen d'indication approprié, et/ou sur le tableau de bord du véhicule de remorquage et/ou sur le tableau de bord du cockpit de l'aéronef, par des relais d'information appropriés entre la broche et le véhicule de remorquage et/ou entre la broche et l'aéronef. Il peut aussi s'agir d'une alarme électrique, ou de tout autre déclenchement d'un signal requérant l'intervention d'un opérateur ou intervenant sur un paramètre de fonctionnement de l'aéronef ou du véhicule de remorquage.

Il est à noter que les moyens de mesure et de comparaison d'effort 11 peuvent comporter des mémoires, afin de garder l'historique des efforts mesurés qui ont dépassé les seuils calculés.

L'invention permet ainsi une détermination exacte, en temps réel, de la charge seuil supportable par l'atterrisseur en fonction de l'orientation de ses roues, et un déclenchement approprié d'une alarme quand il est atteint ou dépassé. Utiliser l'orientation de la broche 8 pour en déduire l'orientation des roues de l'atterrisseur et la charge seuil de la même broche pour en déduire la charge seuil de l'atterrisseur est avantageux, car on peut instrumenter plus facilement une broche 8 de remorquage, qui reste au sol, que l'atterrisseur 1 lui-même.

Bien sûr, le procédé selon l'invention peut également être mis en oeuvre par des moyens de mesure d'angle, de calcul et de comparaison qui ne sont pas regroupés, ou pas tous, sur la broche 8 de remorquage. Certains au moins de ces moyens peuvent ainsi être intégrés aux moyens de calcul et de commande disponibles dans l'aéronef.

Par ailleurs, on peut en outre munir la broche 8 d'une ou plusieurs zones de précontrainte, de façon à ce qu'elle casse dans ces zones au-delà d'un seuil de charge donnée, comme cela existe actuellement dans les broches de remorquage, mais dans ce cas on peut avantageusement prévoir un seuil plus haut.

## Revendications

1. Broche (8) pour l'attelage d'une barre de remorquage à une partie inférieure orientable d'un atterrisseur (1) ayant un axe de pivotement incliné par rapport à la verticale, **caractérisée en ce que** la broche comporte :
- des moyens (9) pour mesurer des efforts auxquels la broche est soumise,
- des moyens (10) pour mesurer l'inclinaison de la broche par rapport à l'horizontale,
- des moyens (11) pour calculer un seuil d'effort en fonction de l'orientation de la partie inférieure de l'atterrisseur déduite de l'inclinaison de la broche,
- des moyens (11) pour comparer un effort mesuré avec le seuil d'effort et pour générer une alarme si les efforts mesurés atteignent ou dépassent un seuil d'effort.

2. Broche (8) selon la revendication 1, dans laquelle les moyens pour mesurer l'inclinaison de la broche par rapport à l'horizontale comprennent un accéléromètre (10), notamment un accéléromètre triaxial.

3. Procédé de protection d'un atterrisseur (1) d'aéronef ayant un axe de pivotement incliné par rapport à la verticale, lors de son remorquage au moyen d'une barre de remorquage (13) attelée à une partie inférieure orientable de l'atterrisseur, comprenant l'étape d'utiliser une broche selon l'une des revendications précédentes pour générer une alarme lorsqu'un effort de remorquage imposé par la barre de remorquage sur l'atterrisseur atteint ou dépasse un seuil d'effort prédéterminé.

4. Procédé selon la revendication 3, dans lequel on fait varier ledit seuil en fonction d'une orientation de la partie inférieure orientable de l'atterrisseur.

5. Procédé selon la revendication 3, selon lequel l'alarme est un affichage alphanumérique ou un avertissement sonore et/ou visuel.

## Patentansprüche

1. Bolzen (8) zur Kopplung einer Schleppstange an einen lenkbaren unteren Abschnitt eines Fahrwerks (1), das eine Drehachse hat, die relativ zur Vertikalen geneigt ist, **dadurch gekennzeichnet, dass** der Bolzen umfasst:
- Mittel (9) zum Messen der Kräfte, denen der Bolzen ausgesetzt ist,
- Mittel (10) zum Messen der Neigung des Bolzens relativ zur Horizontalen,
- Mittel (11) zum Berechnen eines Kraft-Schwellwertes in Abhängigkeit der Ausrichtung des unteren Abschnittes des Fahrwerks, die aus der Neigung des Bolzens hergeleitet wird,
- Mittel (11) zum Vergleichen einer gemessenen Kraft mit dem Kraft-Schwellwert und zum Erzeugen eines Alarms, wenn die gemessenen Kräfte einen Kraft-Schwellwert erreichen oder überschreiten.

2. Bolzen (8) nach Anspruch 1, wobei die Mittel zum Messen der Neigung des Bolzens relativ zur Horizontalen einen Beschleunigungsmesser (10), insbesondere einen Triaxial-Beschleunigungsmesser umfassen.

3. Verfahren zum Schutz eines Flugzeugfahrwerks (1), das eine relativ zur Vertikalen geneigte Drehachse hat, während seines Schleppens mittels einer Schleppstange (13), die an einen lenkbaren unteren Abschnitt des Fahrwerks gekoppelt ist, umfassend den Schritt des Verwendens eines Bolzens nach einem der vorhergehenden Ansprüche zum Erzeugen eines Alarms, wenn eine Schleppkraft, die von der Schleppstange auf das Fahrwerk aufgebracht wird, einen vorgegebenen Kraft-Schwellwert erreicht oder überschreitet.

4. Verfahren nach Anspruch 3, wobei man den genannten Schwellwert in Abhängigkeit einer Ausrichtung des lenkbaren unteren Abschnittes des Fahrwerks verändert.

5. Verfahren nach Anspruch 3, gemäß dem der Alarm eine alphanumerische Anzeige oder eine akustische oder visuelle Warnung ist.

## Claims

1. A pin (8) for coupling a tow bar to a steerable bottom portion of an undercarriage (1) having a pivot axis that is inclined relative to the vertical, the pin being **characterized in that** it includes:
• means (9) for measuring the forces to which the pin is subjected;
• means (10) for measuring the angle of inclination of the pin relative to the horizontal;
• means (11) for calculating a force threshold as a function of the orientation of the bottom portion of the undercarriage as deduced from the angle of inclination of the pin; and
• means (11) for comparing a measured force with a force threshold and for generating an alarm if the measured forces reach or exceed a force threshold.

2. A pin (8) according to claim 1, wherein the means for measuring the angle of inclination of the pin relative to the horizontal comprise an accelerometer (10), in particular a three-axis accelerometer.

3. A method of protecting an aircraft undercarriage (1) having a pivot axis that is inclined relative to the vertical, while the undercarriage is being towed by means of a tow bar (13) hitched to the steerable bottom portion of the undercarriage, the method including the step of using a pin according to either preceding claim in order to generate an alarm when a towing force imposed by the tow bar on the undercarriage reaches or exceeds a predetermined force threshold.

4. A method according to claim 3, wherein said threshold is caused to vary as a function of the orientation of the steerable bottom portion of the undercarriage.

5. A method according to claim 3, wherein the alarm is an alphanumeric display or an audible and/or visible warning.
